# EUROPEAN PATENT SPECIFICATION

(11) **EP 3 453 091 B1**
(45) Date of publication and mention of the grant of the patent: **31.07.2024**
(21) Application number: 17796597.7
(22) Date of filing: 05.05.2017
(51) Int. Cl.: H02H 3/02, H02H 1/00, H02H 3/00, H02H 9/08

(54) **SOLID-STATE LINE DISTURBANCE CIRCUIT INTERRUPTER**
FESTKÖRPERSCHUTZSCHALTER FÜR LEITUNGSSTÖRUNG
INTERRUPTEUR DE CIRCUIT À L'ÉTAT SOLIDE CONTRE LES PERTURBATIONS DE LIGNE

(30) Priority: 07.05.2016 US 201662333193 P; 12.05.2016 US 201662335495 P; 28.10.2016 US 201662414467 P; 09.12.2016 US 201662431926 P
(43) Date of publication of application: 13.03.2019
(60) Divisional application: 24155985.5
(73) Proprietor: Intelesol, LLC, Danville, CA 94506 (US)
(72) Inventor: TELEFUS, Mark, Orinda, CA 94563 (US); LARSON, Bradley, Sunnyvale, CA 94087 (US); RODRIGUEZ, Harry, Gilroy, CA 95020 (US); GERBER, Stephen C., Austin, TX 78735 (US)
(74) Representative: Mammel und Maser Patentanwälte PartG mbB
(86) International application number: PCT/US2017/031207
(87) International publication number: WO 2017/196649

(56) References cited:
- US-A- 4 581 540
- US-A- 5 371 646
- US-A- 6 141 197
- US-A1- 2008 204 950
- US-A1- 2010 091 418
- US-A1- 2011 216 452
- US-A1- 2012 089 266
- US-A1- 2014 029 152

## Description

### CROSS-REFERENCE TO RELATED APPLICATIONS

This application claims priority to: U.S. Provisional Patent Application 62/414467, Titled: High Efficiency AC to DC Converter and Methods, Filed October 28, 2016. U.S. Provisional Patent Application 62/333193, Titled: AC Direct power management semiconductor device and power management method, Filed May 7, 2016, U.S. Provisional Patent Application 62/335495, Titled: AC Direct LVO Electronic Dimming Switch, Filed May 12, 2016, and, U.S. Provisional Patent Application 62/431926, Titled: Electronic Switch and Dimmer, Filed December 9, 2016, all of which include a common inventor.

### STATEMENT REGARDING FEDERALLY SPONSORED RESEARCH OR DEVELOPMENT

Not Applicable.

### BACKGROUND OF THE INVENTION

### TECHNICAL FIELD

The invention relates to a power distribution system and in particular to a fully solid-state circuit interrupter for disconnecting power from a distribution system to a consumer load when a disturbance such as a ground fault or an arc fault is detected by a proprietary fault detection processor incorporated in the interrupter.

### RELATED BACKGROUND ART

Protection of electrical supply systems is accomplished primarily using fuses and circuit breakers that protect against damage to the distribution system by excessive currents by terminating the current flow in the event of a short circuit or an overload condition. Secondarily, ground fault interrupters (GFIs) are used in branch circuits largely to protect consumers from electrical shock resulting from unintended current flow directly to ground by interrupting the current flow as soon as a threshold leakage current is detected. More recently, arc fault interrupters (AFIs) have been employed to reduce the hazard of structure fires that can be started by sparks generated by electrical arc faults.

An arc fault occurs when two conductors in a circuit become so closely spaced that electrical breakdown of the intervening material occurs allowing current to flow intermittently between the conductors. The breakdown and resulting current flow are accompanied by extremely high temperatures, well above the ignition point of typical construction materials thereby presenting an immediate fire hazard in the vicinity of the arc fault.

Arc faults that occur from line to line, line to neutral or line to ground are termed parallel arc faults and typically result in excessive current that trips either the circuit breaker or the GFI device. Arc faults that occur within a line, caused, for example, by the accidental cutting of one conductor in a circuit, are in series with the load and may not be interrupted by the circuit breaker or the GFI. Thus, more sophisticated sensing schemes have been developed to robustly detect series arc faults and trigger disconnection of the affected circuit. The arc fault sensing scheme is further complicated by a need to minimize false triggers caused by complex loads like switching power supplies and dimmer circuits which exhibit current-voltage relationships that mimic arc faults. The sophisticated arc fault sensing schemes typically require more complex circuitry than the simple and bulky electromechanical devices employed in prior art circuit breakers and GFIs. The more complex AFI circuitry typically consists of solid-state analog and digital devices such as operational amplifiers and microprocessors. Thus, there is a need for an all solid-state approach to integrating GFI and AFI functions in a compact, low power interrupter configuration.

US patent applications 20110216452 (Haines et al) and US 20080204950 (Zhou et al) describe arc fault and a ground fault detection system but without the all desired advantages of a compact solid state solution, including a solid state DC power supply and solid state switching. US patent applications 20140029152 (Mazzola, et al) and US Patent application 20100091418 (Xu) describe a solid state switch, in a circuit breaker application but neither includes all components required for both ground fault, and, arc fault detection and interruption. Earlier, not fully solid state, circuit protection circuit solutions are found in US Paten 5371646 (Biegelmeier), US Patent 6141197 (Kim et al), and, US Patent 4581540 (Guajardo).

### BRIEF SUMMARY OF THE INVENTION

The present invention relates to a novel approach for the protection of electrical circuits from ground faults and parallel and series arc faults in a fully solid-state circuit configuration. Solid-state circuits are described that provide the key functions of low-voltage DC power supply, mains voltage and current sensing, fault detection processing and high voltage electronic switching. The invention is set out in the appended set of claims.

An efficient solid-state AC to DC power conversion system is described. The system and related devices address the need for a compact, integrated, low cost design, that is highly efficient and provides access to the low voltages used to drive typical silicon based electronic devices used in home sensors and networking, smart cars, etc. In one embodiment, the system includes an efficient electronic switch employed to disconnect the input of a series voltage regulator circuit from a rectified AC mains power supply to reduce the power dissipated within the series regulator. While the switch is closed, energy is accumulated and stored in a shunt energy storage element. The electronic switch is opened when the rectified AC mains waveform exceeds a threshold value. While the switch is open, energy is supplied to the load by the energy storage element through the regulator circuit. In this way the benefits of the regulator circuit accrue to the attached load circuitry while the power dissipated within the regulator circuit is greatly reduced compared to the prior art. A comparator is used to control the electronic switch. In one embodiment the comparator is comprised of an operational amplifier and a reference voltage source. In another embodiment the comparator is comprised of a MOS field effect transistor. In one embodiment the MOS field effect transistor is controlled through a voltage divider.

One embodiment uses power MOS field-effect transistors (MOSFETs) as electronic switches having very low "on" resistance connected between the AC mains supply and the desired load. Since typical power MOSFETs intrinsically incorporate a body diode in parallel with the conducting channel, pairs of devices are connected in a back-to-back arrangement having the source terminals in common to provide a truly bidirectional (AC) switch configuration. In order to control the switching action of the power MOSFETs a novel floating control circuit is employed that uses rectifying diodes connected at the drains to precharge the gate-source bias voltage thereby turning both devices "on", and an optically coupled phototransistor that shorts the gate terminals to the common source terminal to force the devices into their "off' state when illuminated by an isolated optical source. Thus, the power MOSFET switches are normally "on" unless forced "off' by the optical control signal. The optical control signal can be applied continuously for nominal on-off control of the power delivered to the load, or it can be synchronized with the AC mains waveform to provide phase control. Integrated control circuitry for the optical control signal can provide either leading edge phase control preferred for switching reactive loads or trailing edge phase control preferred for nonlinear loads such as LEDs. The specific examples are not intended to limit the inventive concept to the example application. Other aspects and advantages of the invention will be apparent from the accompanying drawings and detailed description.

### BRIEF DESCRIPTION OF THE DRAWINGS

Figure 1A is a block diagram showing the key elements of the solid-state circuit interrupter.
Figure 1B is a block diagram showing location of circuit faults.
Figure 2 is a schematic diagram showing the functions in the AC-DC converter circuit.
Figure 3 is a schematic diagram of an embodiment of the AC-DC converter using MOS transistors.
Figure 4 is a schematic diagram of an embodiment not forming part of the claimed invention of a bidirectional switch using power MOSFETs.
Figure 5 is a schematic diagram of the bidirectional switch using four switching elements to reduce total switch "on" resistance and increase total switch "off" resistance.
Figure 6 is a schematic diagram of an embodiment of the solid-state circuit interrupter.
Figure 7 is a schematic diagram showing an embodiment of the Fault Detection Processor
Figure 8 is a flow chart of an embodiment of the voltage and current anomaly detection processes. Figure 8 is not according to the invention and is presented for illustration purposes only.

### DETAILED DESCRIPTION OF THE INVENTION

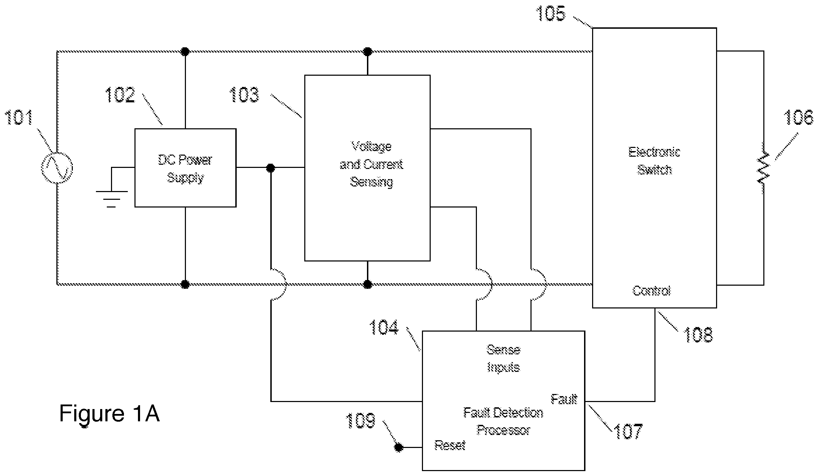

Commonly numbered items in all the Figures refer to the same item throughout the description. Figure 1A is a block diagram showing the key elements of the solid-state circuit interrupter. AC mains 101 is connected to load 106 through electronic switch unit 105. A low voltage DC power supply 102 efficiently provides power for mains voltage and current sensing circuit 103 and the fault detection processor 104. Sense inputs to the fault detection processor 104 are provided from the voltage and current sensing circuit 103. The solid-state sensing circuit comprising sensors that sense the waveforms of the voltage and current applied to the load circuit, and, develop proportional analog waveforms. The fault detection processor processes the proportional analog waveforms and upon detection of either a ground fault or an arc fault generates a fault output 107. Upon detection of a fault, the Fault output 107 of the fault detection processor 104 is latched and fed to the control input 108 of electronic switch 105 which disconnects the load 106 from the mains 101 until a reset 109 is applied to the fault detection processor 104. In another embodiment the output voltage of the Electronic Switch 105 can be varied through the control circuit 108. In this embodiment upon detection of an arc fault, the output voltage can be reduced to a value that is less than a threshold for arcing yet greater than zero. Such an embodiment allows the load circuit to continue operation at a reduced voltage while reducing the chance for a damaging arc. The operation at reduced voltage also allows for continued characterization of the load and mains supply circuit to determine the location of an arc fault for subsequent replacement or repair.

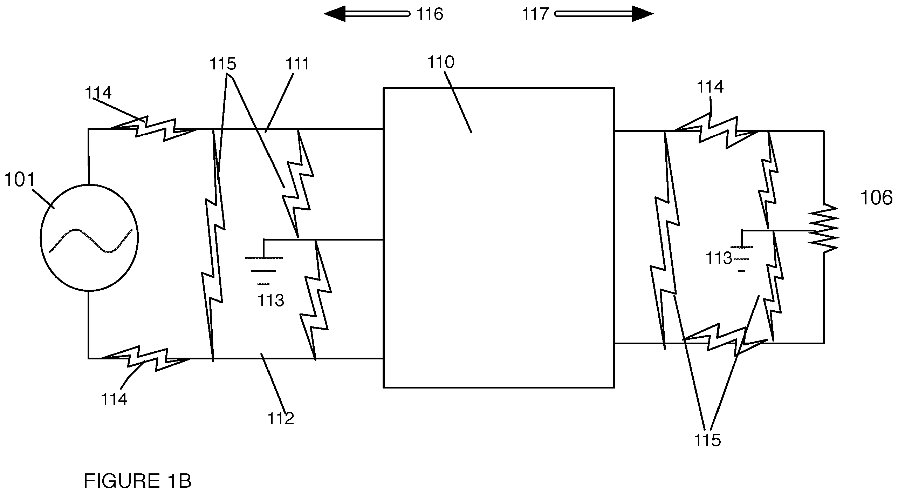

Figure 1B shows typical locations of faults in a power supply system. In one embodiment the circuit interrupter 110 is located between the AC Mains supply 101 and the load 106. Arc faults can be in series 114 and occur in both the line 111 and neutral 112 both before 116 the circuit interrupter and after 117 the circuit interrupter. Parallel faults 115 can occur on either side of the circuit interrupter both between line and neutral and between line or neutral and ground 113. In one embodiment the circuit interrupter 110 is located between the AC Mains 101 and the load 106, such as in an outlet plug. There are a plurality circuit interrupters installed in the AC supply network. In one embodiment multiple circuit interrupters are located in branches of the AC supply network. In another embodiment (not shown) a plurality of circuit interrupters are located in series in the same branch of the AC supply network. Detection of a fault is based upon analysis of both the voltage and the current associated with the fault. A plurality of fault detectors in series can, based upon the current analysis determine a location of a fault relative to the circuit interrupters.

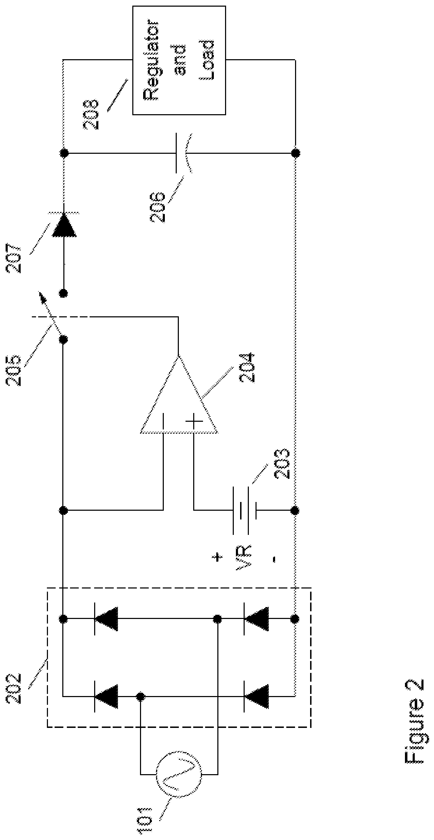

Figure 2 shows a schematic diagram of an improved AC-DC converter circuit that includes the AC mains 101 and a diode bridge 202. The waveform at the diode bridge 202 output is simply a full-wave rectified sinusoidal waveform that conventionally varies from 0V to approximately 170V peak for a conventional AC mains having an rms value of 120V. Note, however, that the method described below applies to any periodic power waveform assuming that the numeric specifications of the affected components are suitably adjusted. Additionally, the power waveform can include a DC offset if it is smaller than the reference voltage described below.

The circuitry includes a comparator circuit 204 having its inverting input connected to the diode bridge 202 output and a voltage reference 203 connected to its non-inverting input, wherein the comparator 204 controls a series switch 205 that disconnects the diode bridge output from succeeding circuitry (opens switch 205) if the diode bridge output voltage exceeds the reference voltage V_{R}. When the reference voltage V_{R} exceeds the diode bridge output voltage then switch 205 is closed and capacitor 206 is charged through series diode 207. Diode 207 keeps capacitor 206 from discharging back through switch 205 when the diode bridge output voltage decreases. The combination of diode 207 and capacitor 206 form a "peak detector" circuit that stores energy in each one-half of an AC mains cycle to supply to subsequent regulator circuitry and the load 208. The voltage across capacitor 206 need only be large enough to satisfy the energy requirement of the subsequent regulator circuitry and load 208. The input voltage to the series regulator is significantly reduced compared to the rms value of the AC mains. The operation of the "peak detector" circuit ensures the peak voltage stored on capacitor 206 is always V_{R}, regardless of fluctuations in the peak voltage of the AC mains, as long as the voltage of the AC mains remains larger than V_{R}. This embodiment of a switching circuit operates as a voltage regulator circuit itself. Since the operation of switch 205 uses negligible energy, the efficiency of the AC-DC converter circuit shown in Figure 2 is much larger than seen for the prior art circuits. An additional benefit is a significant reduction in the heat generated by the circuit, thereby reducing the operating temperature rise. Although the comparator 204 is a well-known analog circuit element other analog or digital circuits could be employed to accomplish the desired thresholding function needed to operate switch 205.

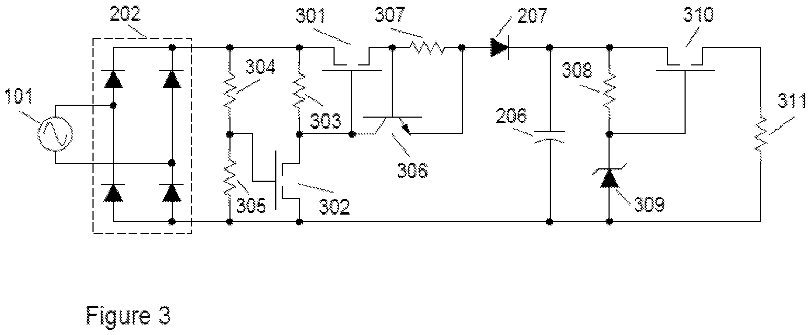

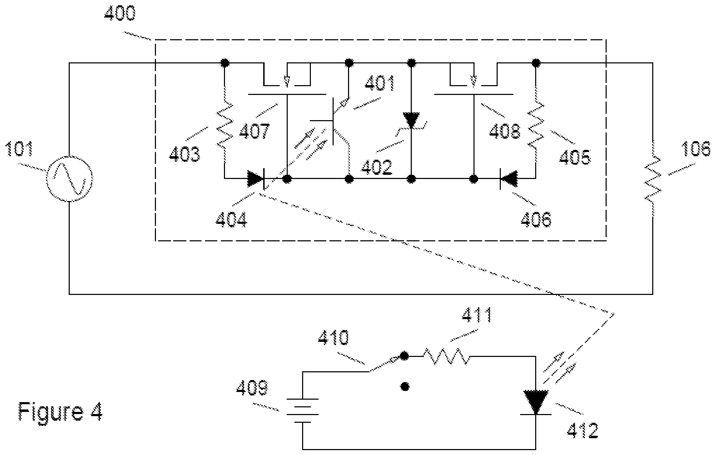

Figure 3 shows a schematic diagram of the AC-DC converter circuit wherein the switch 205 shown in Figure 2 is implemented using an enhancement mode MOSFET 301 and the comparator circuit 204 is realized as a single common-source amplifier stage also using an enhancement mode MOSFET 302 characterized by a threshold voltage, V_{T}, and a load resistor 303. Thus, when the output of the voltage divider network comprising resistors 304 and 305 exceeds the threshold voltage of MOSFET 302, V_{T}, the gate of switch 301 is pulled to ground thereby opening switch 301. When the output of the voltage divider network is smaller than V_{T} the gate of MOSFET 301 is connected to its drain, thereby closing the switch. The AC-DC converter circuit further includes bipolar transistor 306 and current sensing resistor 307 to limit the charging current through MOSFET 301 and diode 207. The regulator function is a conventional series regulator circuit accomplished using series pass transistor 310 connected to load 311 and biased by Zener diode 309 which sets the DC output voltage and is biased through resistor 308. Figure 4 is a schematic diagram showing an embodiment of an optically isolated bidirectional electronic switch circuit element. In switching unit 400 Zener diode 402 has a Zener voltage greater than the threshold voltage of the power MOSFETs and is biased through rectifier diodes 404 and 406 connected at the drain terminals of the power MOSFETs and protected by current limiting resistors 403 and 405, respectively. Thus, in the absence of incident illumination resistor-diode branches 403-404 and 405-406 provide bias for Zener diode 402 when either of the drain terminals exceeds the Zener voltage, placing power MOSFETs 407 and 408 in the "on" state. When illuminated by control circuit LED 412 powered by external DC source 409 through control switch 410 and bias resistor 411, phototransistor 401 shunts the bias current from branches 403-404 and 405-406 to the source terminals of the power MOSFETS placing them in the "off' state. In this circuit the turn-on time constant is dictated by the value of the current limiting resistors 403 and 405 and the gate-to-source capacitance of the power MOSFETs, while the turn-off time constant is dictated by the saturation current of the phototransistor 401 at the illumination level provided by LED 412.

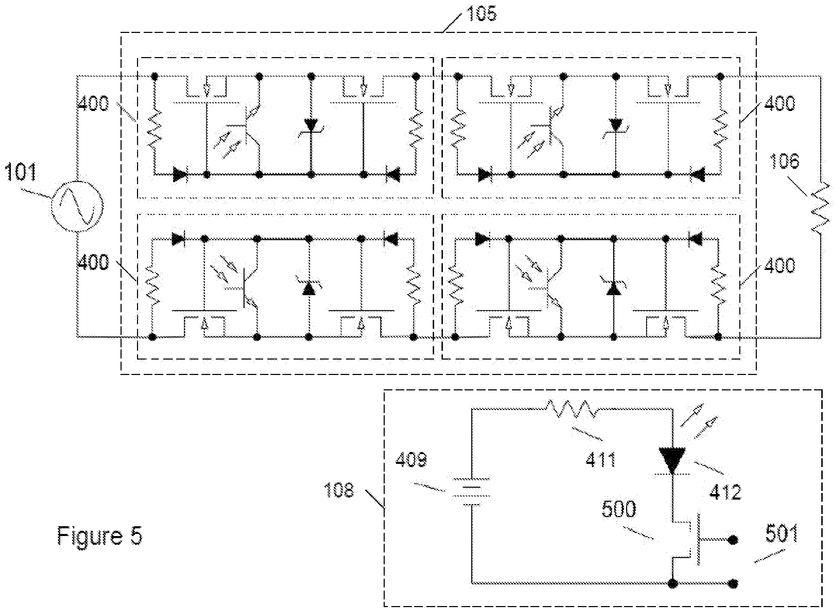

Figure 5 is a schematic diagram of the embodiment of Figure 4 using two switch units 400 in each arm of the AC supply to improve the performance of the circuit. In this configuration the four switch units 400 comprise the electronic switch 105 shown in Figure 1A. In the preferred embodiment the power MOSFETs are selected to have one-fourth the breakdown voltage of the units used in Figure 4. Because of the relationship between breakdown voltage and "on" resistance of MOSFET devices, the "on" resistance of the individual switch units can be expected to be reduced by a factor of 32 and the total "on" resistance of the two switch units connected in series is reduced by a factor of 8 relative to the circuit in Figure 4. Additionally, the voltage drop across each of the switch units in the "off' state is quartered, thereby reducing the dV_{ds}/dt experienced by each unit by a factor of four and consequently reducing the "off' state leakage current. Additionally, the inventor has found experimentally that this circuit configuration further improves the turn-off characteristics of the switch devices, further reducing leakage currents. In this figure control switch 410 is replaced with transistor 500 which is operated through control port 501 which together with DC supply 409, resistor 411 and LED 412 comprise the control circuit 108 shown in Figure 1A. In another embodiment, Transistor 500 is controlled by an external control voltage applied to control terminals 501. This allows for the rapid switching of the LED in synchronism with the AC mains waveform through external control circuitry (not shown) to provide phase control of the output of the switch. In this embodiment power to the load is reduced upon occurrence of a fault signal. In another embodiment the control signal is a variable DC voltage allowing variable illumination of the LED thereby allowing the MOSFETs to operate in a linear mode.

In another embodiment the output voltage and power of the Electronic Switch is varied through the control circuit 108. Upon detection of an arc fault, the output voltage can be reduced to a value that is less than a threshold for arcing yet greater than zero. Such an embodiment allows the load circuit to continue operation at a reduced voltage while reducing the chance for a damaging arc. The operation at reduced voltage also allows for continued characterization of the load and mains supply circuit to determine the location of an arc fault for subsequent replacement or repair.

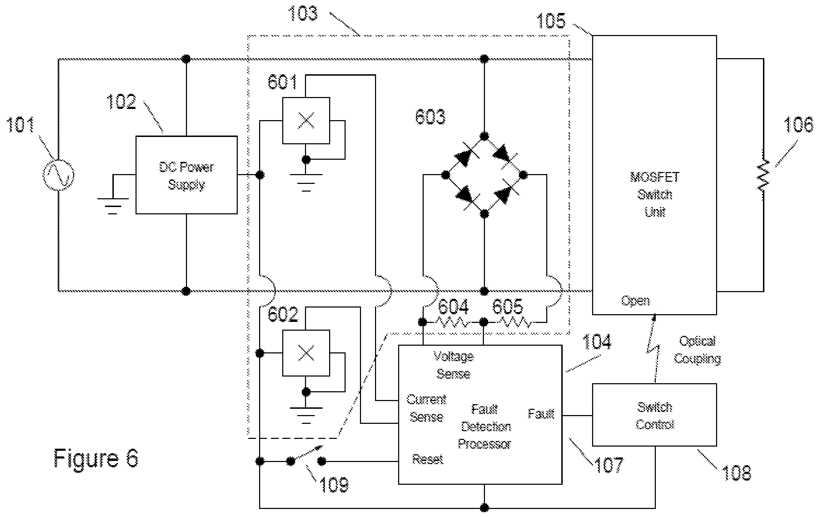

Figure 6 is a schematic diagram of an embodiment of the solid-state circuit interrupter. AC mains 101 is connected to load 106 through bidirectional MOSFET switch unit 105 as depicted in Figure 5. Low voltage DC power supply 102 as shown in Figure 3 efficiently provides power for mains voltage and current sensing circuit 103, the fault detection processor 104 and the bidirectional MOSFET switch control circuit 108. Sense inputs to the fault detection processor 104 are provided from the voltage and current sensing circuit 103. Current sensing is provided using solid-state Hall Effect sensors 601 and 602 which provide an output voltage proportional to the current flowing through the sensor. The Hall Effect sensor outputs are fed to the current sense inputs of the fault detection processor 104. The AC mains voltage waveform is full-wave rectified in bridge unit 603. (In order to reduce the number of components in the circuit, bridge 603 can be eliminated and the full-wave rectified waveform obtained directly from the output of bridge 202 in the AC-DC converter circuit. Bridge 603 is illustrated here for clarity.) The full-wave rectified waveform is attenuated using a resistive divider network comprising resistors 604 and 605 and applied to the voltage sense inputs of the fault detection processor 104. Upon detection of a fault, the Fault output 107 of the fault detection processor 104 is latched and fed to the control input of electronic switch control circuit 108 which provides the optical control signal to the bidirectional MOSFET switch unit 105 which disconnects the load 106 from the mains 101 until a reset 109 is applied to the fault detection processor 104. In another embodiment the output voltage of the Electronic Switch is varied through the control circuit 108. In this embodiment upon detection of an arc fault, the output voltage is reduced to a value that is less than a threshold for arcing yet greater than zero. Such an embodiment allows the load circuit to continue operation at a reduced voltage while reducing the chance for a damaging arc. The operation at reduced voltage also allows for continued characterization of the load and mains supply circuit to determine the location of an arc fault for subsequent replacement or repair.

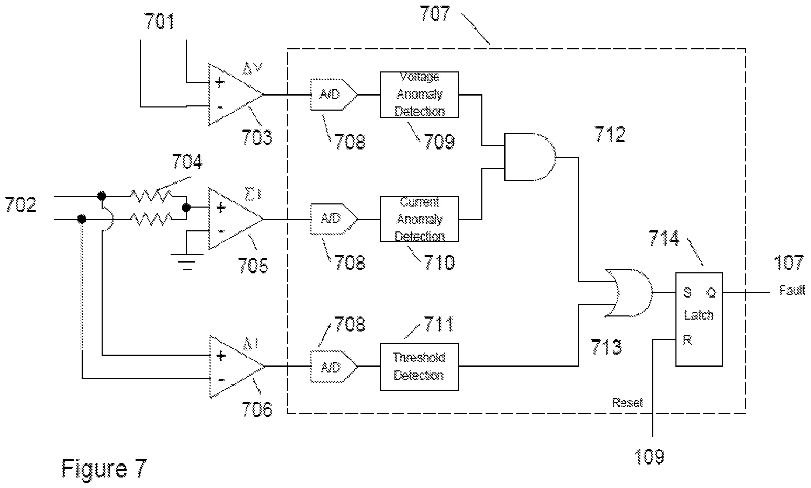

Figure 7 is a schematic diagram showing an embodiment of the Fault Detection Processor. The voltage sense signals are applied to the input terminals 701 of a differential amplifier 703 and the resulting difference signal ΔV is applied to the input of an analog-to-digital (A/D) converter 708 within microprocessor 707. Similarly, the current sense inputs 702 are summed in the input circuit 704 of operational amplifier 705 forming a signal proportional to the sum of the currents ΣI in the line and neutral legs of the AC mains 101. The ΣI signal is also applied to the input of an A/D converter.

The digitized ΔV signal is processed by subprogram 709 within the microprocessor to detect anomalies in the voltage waveform over several cycles that indicate the presence of an arc fault. One nonlimiting example of such a voltage anomaly is the presence of excess high frequency energy impressed upon the normally low frequency AC mains voltage waveform.

The digitized ΣI signal is processed by subprogram 710 within microprocessor 707 to detect anomalies in the current waveforms over several cycles that indicate the presence of an arc fault. One nonlimiting example of such a current anomaly is the occurrence of "shoulders" (flat spots) in the current waveform that occur near zero-crossings of the current waveform. The combined appearance of a voltage waveform anomaly and a current waveform anomaly is one indicator of an arc fault 712.

The current sense signals 702 are also applied to the inputs of operational amplifier 706 which forms a difference signal ΔI proportional to the difference between the currents in the line and neutral legs. The ΔI signal is digitized and is processed by subprogram 711 which accomplishes a threshold detection that signals a ground fault 713. Arc fault 712 and ground fault 713 signals are combined and applied to the input of latch 714 which stores the fault condition 107 until cleared by an external reset signal.

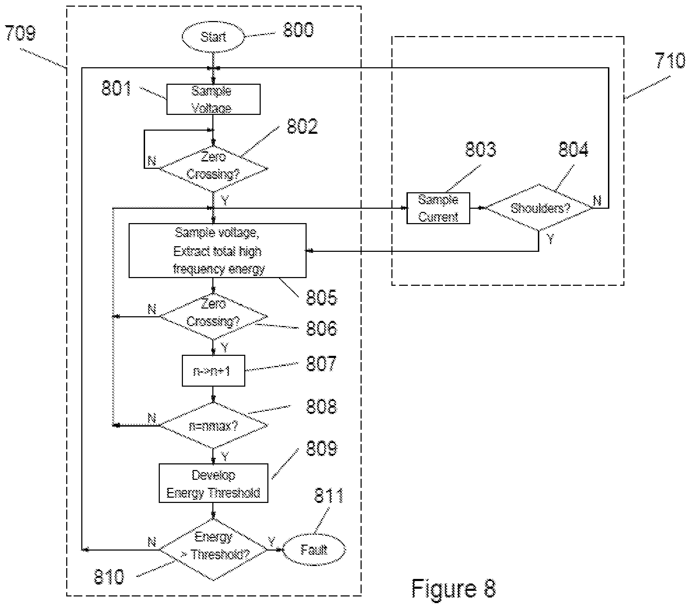

Figure 8 shows a flow chart for nonlimiting examples of the voltage anomaly detection subprogram 709 and the current anomaly detection subprogram 710 described above. Upon starting 800, primary variables are initialized and the subprocess loops 801 until a first voltage zero crossing is detected 802. Since the breakdown leading to an arc is voltage driven, any current shoulder (if one exists) will be time coincident with a voltage zero crossing. Upon detecting an initial voltage zero crossing the voltage 805 and current 803 are both sampled. A shoulder is declared to be detected 804 in the current anomaly detection process 710 if the current remains below a preset threshold for at least a preset minimum duration, tₘᵢₙ, but not more than a preset maximum duration, tₘₐₓ. If the current exceeds the threshold while less than tₘᵢₙ the process exits the current anomaly detection subprocess and returns to the start 800 until the next voltage zero crossing occurs. On the other hand, if the current remains less than the threshold for longer than tₘₐₓ then the current is taken to be "off" and the process returns to start 800. The voltage anomaly discriminant is developed from the high frequency content of the voltage waveform 803. High pass filtering with zero time lag can be achieved by differentiating the waveform and accumulating the square of the resulting differential as a measure of the high frequency energy over the measurement period. To form a threshold against which to compare this total high frequency energy, the squared differential is accumulated 807 separately during a detected current shoulder 804 (as signaled by the current anomaly detection subprocess 710) when there is no arc. Thus, it should represent only the background noise energy during the shoulder periods. This is repeated 808 over a number (n) of cycles of the voltage waveform and if 810 the accumulated noise eventually exceeds a weighted average threshold 809 an arc fault is declared 811. Note that since the detection of current shoulders 804 is required for the successful formation of the noise energy threshold, this fault declaration derives from the combined presence of current shoulders and excess voltage noise energy. In another embodiment the detection of a fault 811, causes the control circuit 108 (see Figure 5) for the switch to reduce the output power to the load 106. In another embodiment the detection of a fault causes the control circuit to the switch to reduce the output voltage to the load. In another embodiment the detection of a fault causes a reduction of a preselected increment of either the power or the voltage to the load and the process of Figure 8 then cycles back to start 800. The system again is tested for a fault and the voltage or power is again incrementally reduced until a fault is not detected.

### SUMMARY

A novel approach is described for the protection of electrical circuits from ground faults and parallel and series arc faults in a fully solid-state circuit configuration. Solid-state circuits are described that provide the key functions of low-voltage DC power supply, mains voltage and current sensing, fault detection processing and high voltage electronic switching.

## Claims

1. A solid-state circuit interrupter for an AC electrical supply circuit (101) having a line (111) and a neutral (112) that supplies power to a load circuit (106), having an applied voltage and an applied current, and, controls the power upon detecting ground faults, and, parallel and series arc faults, in the load circuit, the circuit interrupter comprising:
a. an AC-DC converter circuit (102) providing low-voltage DC power to a fault processing circuit (104), and, a solid-state sensing circuit (103),
b. the solid-state sensing circuit (103) comprising sensors that sense the waveforms of the applied voltage and applied current to the load circuit (106), and, develop proportional analog waveforms of the applied voltage and the applied current, and,
c. the fault processing circuit (104) comprising:
i. a solid-state processor that processes the proportional analog waveforms, and upon at least one of: 1) detecting the presence of a ground fault in the load circuit and 2) detecting the presence of an arc fault in the load circuit, generates a fault output signal (107), and,
ii. a reset port (109) that stops the fault output signal upon receiving a reset signal, and,
**characterized by**:
d. two solid-state bidirectional switch circuits (400) in each of the line (111) and neutral (112) between the AC electrical supply circuit and the load circuit the solid-state bidirectional switch circuits each electrically isolated from the AC-DC converter circuit, the sensing circuits, and the processing circuit, and, each solid-state bidirectional switch circuit controlled by a control circuit (108) which provides an optical control signal to the solid-state bidirectional switch circuits, and, upon detection of the ground fault or the arc fault by the processing unit disconnects the load from the AC electrical supply, and,
e. the AC-DC converter circuit (102) comprises:
i. a rectifier circuit (202) driven by said AC electrical supply circuit (101) and providing a time varying direct current rectified waveform as a rectifier output,
ii. an energy storage element (206) capable of providing energy in the form of a direct current and operably connected to the fault processing circuit and the solid-state sensing circuit, and
iii. a first MOSFET (301) between said rectifier circuit (202) and said energy storage element (206) the first MOSFET having a gate and a source and controlled by a comparator circuit (204), and, the comparator circuit (204) is realized as a single common-source amplifier stage comprising a second MOSFET (302) having a characteristic threshold gate - source voltage, V_{T}, and connected to the gate and source of the first MOSFET, and, a gate of the second MOSFET connected through a voltage divider (304, 305), to the rectifier output, the voltage divider having an output, and, when the output of the voltage divider network exceeds V_{T} of the second MOSFET semiconductor device, the gate of the first MOSFET is pulled to ground thereby opening the first MOSFET, and, when the output of the voltage divider network is less than V_{T}, the gate of first MOSFET is connected to its drain thereby closing the first MOSFET and charging the energy storage element (206),
iv. an electronic circuitry (306, 307) between the first MOSFET (301) and the energy storage element (206) to limit the current flowing through the first MOSFET (301), and,
v. a voltage regulation circuit (308, 309, 310) between said energy storage element (206) and said internal load (311), the internal load being the combined fault processing circuit (104), and, the solid state sensing circuit (103).

2. The solid-state circuit interrupter of claim 1 wherein the control circuit (108) reduces the applied output voltage to the load circuit (106) to a value less than a threshold for arcing yet greater than zero when the arc fault output signal (107) is generated.

3. The solid-state circuit interrupter of claim 1 wherein the solid-state sensing circuits that sense the waveforms of the applied voltage and applied current to the load circuit comprise:
a. hall-effect current sensors (601, 602) having DC bias terminals and current sense terminals, with one hall-effect current sensor mounted to each of the AC power line (111) and neutral (112), with DC bias provided to the DC bias terminals by the AC-DC converter (102), and, with the current sense terminals attached to the fault processing circuit (104), and
b. the rectifier circuit (603, 202) driven by said AC supply circuit (101) and providing a time varying direct current voltage waveform as an output, wherein the voltage waveform is attenuated using a resistive divider (604, 605), and, the resulting attenuated voltage waveform is applied to the fault processing circuit (104).

4. The solid-state circuit interrupter of claim 1 wherein the fault processing circuit (104) comprises:
a. differential amplifiers (703, 705, 706) powered by the AC-DC converter (102) operably connected (701, 702) to the solid-state sensing circuits (601, 602, 603) to condition the proportional analog waveforms producing conditioned proportional analog waveforms,
b. a microprocessor (707) powered by the AC-DC (102) converter and programmed to digitize the conditioned proportional analog waveforms, producing digitized current and voltage waveforms, and,
i. to execute a subprogram (711) to accomplish signal processing on the digitized current and voltage waveforms to effect the detection of ground faults, and
ii. to execute a subprogram (709, 710) to accomplish signal processing on the digitized current and voltage waveforms to effect the detection of arc faults, and
c. a latch circuit (714) having a set condition and a reset condition powered by the AC-DC converter (102), and, placed in the set condition by the detection of either ground faults or arc faults, and, remaining in the set condition until placed in the reset condition using an external reset signal (109).

5. The solid-state circuit interrupter of claim 1 wherein the subprogram (709, 710) to accomplish signal processing on the digitized voltage and current waveforms to effect the detection of arc faults further comprises:
a. a subprogram that detects the presence of substantial subintervals that occur over a preset measurement time interval wherein the amplitude of the digitized current waveform is less than a preset value, and,
b. a subprogram that calculates the total noise energy contained within the digitized voltage waveform over the preset measurement time interval and further calculates a threshold energy value from the noise energy contained within the digitized voltage waveform during the subintervals wherein the amplitude of the digitized current waveform is less than the preset value, and,
c. a subprogram that signals the detection of an arc fault if the sum of the subintervals wherein the amplitude of the digitized current waveform is less than the preset value obtained over the preset measurement time interval falls within a preset range of time interval values, and, the total noise energy contained within the digitized voltage waveform exceeds the calculated threshold energy value.

6. The solid-state circuit interrupter of claim 1 wherein each of the solid-state bidirectional switch circuits (400) has an input terminal and an output terminal and each further comprise:
a. first (407) and second (408) series connected power MOSFETs, each power MOSFET having a drain terminal, a source terminal and a gate terminal and having a threshold voltage specified between the gate terminal and the source terminal, wherein the drain terminal of the first power MOSFET (407) comprises the input terminal of the solid-state bidirectional switch circuit (400) and drain terminal of the second power MOSFET (408) comprise the output terminal of the solid-state bidirectional switch circuit (400), the source terminals of the first and second power MOSFETs are interconnected at a first control terminal and the gate terminals of the first and second power MOSFETs (407, 408) are interconnected at a second control terminal, and;
b. a voltage source comprising a first rectifier device (404) connected from the input terminal of the solid-state bidirectional switch circuit (400) to the second control terminal and a second rectifier device (406) connected from the output terminal of the solid-state bidirectional switch circuit (400) to the second control terminal and a Zener diode (402) connected from the first control terminal to the second control terminal, the ZENER diode having a Zener voltage that exceeds the threshold voltage and applied across the first and second control terminals through a current limiting resistor (403, 405); and
c. a phototransistor (401) having a conductance proportional to the intensity of illumination incident upon the photo-activated electronic device and connected from the first control terminal to the second control terminal; and
d. a light emitting device (412) in the control circuit (108) and arranged to illuminate the switch (401) and activated by the fault detection circuit when a fault is signaled (109).

7. The solid-state circuit interrupter of claim 6 wherein the control circuit (108) provides phase control of a power output to the load.

8. The solid-state circuit interrupter of claim 6 wherein the control circuit (108) provides linear control of the power output to the load.

## Patentansprüche

1. Festkörper-Schaltkreisunterbrecher für einen elektrischen Wechselstrom-Versorgungsschaltkreis (101) mit einer Leitung (111) und einem Nullleiter (112), der einen Lastschaltkreis (106) mit einer angelegten Spannung und einem angelegten Strom mit Energie versorgt und die Energie beim Erkennen von Erdungsfehlern und parallelen und seriellen Lichtbogenfehlern in dem Lastschaltkreis steuert, wobei der Schaltkreisunterbrecher Folgendes umfasst:
a. eine Wechselstrom-Gleichstrom-Wandlerschaltung (102), die eine Niederspannungs-Gleichstromleistung an eine Fehlerverarbeitungsschaltung (104) liefert, und eine Festkörper-Erfassungsschaltung (103),
b. wobei die Festkörper-Erfassungsschaltung (103) Sensoren umfasst, die die Wellenformen der an die Lastschaltung (106) angelegten Spannung und des angelegten Stroms erfassen und proportionale analoge Wellenformen der angelegten Spannung und des angelegten Stroms entwickeln, und,
c. die Fehlerverarbeitungsschaltung (104), die Folgendes umfasst:
i. einen Festkörperprozessor, der die proportionalen analogen Wellenformen verarbeitet, und bei mindestens einem der folgenden Punkte: 1) Erkennen des Vorhandenseins eines Erdungsfehlers im Lastkreis und 2) Erkennen des Vorhandenseins eines Lichtbogenfehlers im Lastkreis, ein Fehlerausgangssignal (107) erzeugt, und,
ii. einen Rücksetzanschluss (109), der das Fehlerausgangssignal beim Empfang eines Rücksetzsignals stoppt, und,
**gekennzeichnet durch**:
d. zwei bidirektionale Festkörper-Schaltkreise (400) in jeder der Leitung (111) und des Nullleiters (112) zwischen dem Wechselstrom-Versorgungsstromkreis und dem Laststromkreis, wobei die bidirektionalen Festkörper-Schaltkreise jeweils elektrisch von dem Wechselstrom-Gleichstrom-Wandlerstromkreis, den Erfassungsstromkreisen und dem Verarbeitungsstromkreis isoliert sind, und jeder bidirektionale Festkörper-Schaltkreis von einer Steuerschaltung (108) gesteuert wird, die ein optisches Steuersignal an die bidirektionalen Festkörper-Schaltkreise liefert und bei Erkennung des Erdungsfehlers oder des Lichtbogenfehlers durch die Verarbeitungseinheit die Last von der AC-Stromversorgung trennt, und,
e. die AC-DC-Wandlerschaltung (102) umfasst:
i. eine Gleichrichterschaltung (202), die von der AC-Stromversorgungsschaltung (101) angesteuert wird und eine zeitvariable gleichgerichtete Gleichstromwellenform als Gleichrichterausgang bereitstellt,
ii. ein Energiespeicherelement (206), das in der Lage ist, Energie in Form eines Gleichstroms zu liefern, und das betriebsmäßig mit der Fehlerverarbeitungsschaltung und der Festkörper-Erfassungsschaltung (103) verbunden ist, und
iii. einen ersten MOSFET (301) zwischen der Gleichrichterschaltung (202) und dem Energiespeicherelement (206), wobei der erste MOSFET ein Gate und eine Source aufweist und von einer Komparatorschaltung (204) gesteuert wird, und wobei die Komparatorschaltung (204) als eine einzige Verstärkerstufe mit gemeinsamer Source realisiert ist, die einen zweiten MOSFET (302) mit einer charakteristischen Schwellenwert-Gate-Source-Spannung, V_{T}, umfasst und mit dem Gate und der Source des ersten MOSFET verbunden ist, und wobei ein Gate des zweiten MOSFET über einen Spannungsteiler (304, 305) mit dem Gleichrichterausgang verbunden ist, wobei der Spannungsteiler einen Ausgang hat, und, wenn der Ausgang des Spannungsteilernetzwerks V_{T} der zweiten MOSFET-Halbleitervorrichtung übersteigt, das Gate des ersten MOSFET auf Masse gezogen wird, wodurch der erste MOSFET geöffnet wird, und, wenn der Ausgang des Spannungsteilernetzwerks kleiner als V_{T} ist, das Gate des ersten MOSFET mit seinem Drain verbunden wird, wodurch der erste MOSFET geschlossen und das Energiespeicherelement (206) geladen wird,
iv. eine elektronische Schaltung (306, 307) zwischen dem ersten MOSFET (301) und dem Energiespeicherelement (206) zur Begrenzung des durch den ersten MOSFET (301) fließenden Stroms, und,
v. eine Spannungsregelungsschaltung (308, 309, 310) zwischen dem Energiespeicherelement (206) und der internen Last (311), wobei die interne Last die kombinierte Fehlerverarbeitungsschaltung (104) ist, und die Festkörpererfassungsschaltung (103).

2. Festkörper-Schaltkreisunterbrecher nach Anspruch 1, bei dem die Steuerschaltung (108) die an die Lastschaltung (106) angelegte Ausgangsspannung auf einen Wert reduziert, der unter einem Schwellenwert für Lichtbogenbildung liegt, jedoch größer als Null ist, wenn das Lichtbogenfehler-Ausgangssignal (107) erzeugt wird.

3. Festkörper-Schaltkreisunterbrecher nach Anspruch 1, wobei die Festkörper-Sensorschaltungen, die die Wellenformen der an den Laststromkreis angelegten Spannung und des angelegten Stroms erfassen, Folgendes umfassen:
a. Halleffekt-Stromsensoren (601, 602) mit Gleichstrom-Vorspannungsanschlüssen und Stromerfassungsanschlüssen, wobei je ein Halleffekt-Stromsensor an der Wechselstromleitung (111) und am Nullleiter (112) angebracht ist, wobei die Gleichstrom-Vorspannungsanschlüsse durch den Wechselstrom-Gleichstrom-Wandler (102) mit Gleichstrom versorgt werden, und wobei die Stromerfassungsanschlüsse mit der Fehlerverarbeitungsschaltung (104) verbunden sind, und
b. die Gleichrichterschaltung (603, 202), die von der Wechselstromversorgungsschaltung (101) angesteuert wird und eine zeitveränderliche Gleichspannungswellenform als Ausgang bereitstellt, wobei die Spannungswellenform unter Verwendung eines Widerstandsteilers (604, 605) gedämpft wird, und die resultierende gedämpfte Spannungswellenform an die Fehlerverarbeitungsschaltung (104) angelegt wird.

4. Festkörper-Schaltkreisunterbrecher nach Anspruch 1, wobei die Fehlerverarbeitungsschaltung (104) Folgendes umfasst:
a. Differenzverstärker (703, 705, 706), die von dem Wechselstrom-Gleichstrom-Wandler (102) gespeist werden und betriebsmäßig (701, 702) mit den Festkörper-Erfassungsschaltungen (601, 602, 603) verbunden sind, um die proportionalen analogen Wellenformen zu konditionieren und konditionierte proportionale analoge Wellenformen zu erzeugen,
b. einen Mikroprozessor (707), der von dem Wechselstrom-Gleichstrom-Wandler (102) gespeist wird und so programmiert ist, dass er die aufbereiteten proportionalen analogen Wellenformen digitalisiert und digitalisierte Strom- und Spannungswellenformen erzeugt, und,
i. ein Unterprogramm (711) auszuführen, um eine Signalverarbeitung an den digitalisierten Strom- und Spannungswellenformen durchzuführen, um die Erkennung von Erdungsfehlern zu bewirken, und
ii. ein Unterprogramm (709, 710) auszuführen, um eine Signalverarbeitung an den digitalisierten Strom- und Spannungswellenformen durchzuführen, um die Erkennung von Lichtbogenfehlern zu bewirken, und c. eine Verriegelungsschaltung (714), die einen Setzzustand und einen Rücksetzzustand hat, der von dem Wechselstrom-Gleichstrom-Wandler (102) gespeist wird, und die durch die Erkennung von entweder Erd- oder Lichtbogenfehlern in den Setzzustand versetzt wird und in dem Setzzustand bleibt, bis sie durch ein externes Rücksetzsignal (109) in den Rücksetzzustand versetzt wird.

5. Festkörper-Schaltkreisunterbrecher nach Anspruch 1, wobei das Unterprogramm (709, 710) zum Durchführen der Signalverarbeitung an den digitalisierten Spannungs- und Stromwellenformen, um die Erkennung von Lichtbogenfehlern zu bewirken, ferner umfasst:
a. ein Unterprogramm, das das Vorhandensein von wesentlichen Teilintervallen erkennt, die über ein voreingestelltes Messzeitintervall auftreten, in dem die Amplitude der digitalisierten Stromwellenform kleiner als ein voreingestellter Wert ist, und,
b. ein Unterprogramm, das die gesamte Rauschenergie berechnet, die in der digitalisierten Spannungswellenform über das voreingestellte Messzeitintervall enthalten ist, und ferner einen Schwellenenergiewert aus der Rauschenergie berechnet, die in der digitalisierten Spannungswellenform während der Unterintervalle enthalten ist, in denen die Amplitude der digitalisierten Stromwellenform kleiner als der voreingestellte Wert ist, und,
c. ein Unterprogramm, das die Erkennung eines Lichtbogenfehlers signalisiert, wenn die Summe der Unterintervalle, in denen die Amplitude der digitalisierten Stromwellenform kleiner als der über das voreingestellte Messzeitintervall erhaltene voreingestellte Wert ist, in einen voreingestellten Bereich von Zeitintervallwerten fällt und die gesamte in der digitalisierten Spannungswellenform enthaltene Rauschenergie den berechneten Schwellenenergiewert überschreitet.

6. Festkörper-Schaltkreisunterbrecher nach Anspruch 1, wobei jeder der bidirektionalen Festkörper-Schaltkreise (400) einen Eingangsanschluss und einen Ausgangsanschluss aufweist und jeder weiterhin Folgendes umfasst
a. einen ersten (407) und einen zweiten (408) in Reihe geschalteten Leistungs-MOSFET, wobei jeder Leistungs-MOSFET einen Drain-Anschluss, einen Source-Anschluss und einen Gate-Anschluss aufweist und eine Schwellenspannung hat, die zwischen dem Gate-Anschluss und dem Source-Anschluss festgelegt ist, wobei der Drain-Anschluss des ersten Leistungs-MOSFETs (407) den Eingangsanschluss des bidirektionalen Festkörper-Schaltkreises (400) umfasst und der Drain-Anschluss des zweiten Leistungs-MOSFETs (408) den Ausgangsanschluss des bidirektionalen Festkörper-Schaltkreises (400) umfasst, die Source-Anschlüsse des ersten und zweiten Leistungs-MOSFETs an einem ersten Steueranschluss miteinander verbunden sind und die Gate-Anschlüsse des ersten und zweiten Leistungs-MOSFETs (407, 408) an einem zweiten Steueranschluss miteinander verbunden sind, und;
b. eine Spannungsquelle mit einer ersten Gleichrichtervorrichtung (404), die vom Eingangsanschluss des bidirektionalen Festkörperschaltkreises (400) mit dem zweiten Steueranschluss verbunden ist, und einer zweiten Gleichrichtervorrichtung (406), die vom Ausgangsanschluss des bidirektionalen Festkörperschaltkreises (400) mit dem zweiten Steueranschluss verbunden ist, und einer Zenerdiode (402), die vom ersten Steueranschluss mit dem zweiten Steueranschluss verbunden ist, wobei die ZENER-Diode eine Zener-Spannung aufweist, die die Schwellenspannung übersteigt und über einen Strombegrenzungswiderstand (403, 405) an den ersten und zweiten Steueranschluss angelegt wird; und
c. einen Fototransistor (401), dessen Leitwert proportional zur Intensität der auf die fotoaktivierte elektronische Vorrichtung einfallenden Beleuchtung ist und der von der ersten Steuerklemme mit der zweiten Steuerklemme verbunden ist; und
d. eine lichtemittierende Vorrichtung (412) in der Steuerschaltung (108), die so angeordnet ist, dass sie den Schalter (401) beleuchtet und durch die Fehlererkennungsschaltung aktiviert wird, wenn ein Fehler signalisiert wird (109).

7. Festkörper-Schaltkreisunterbrecher nach Anspruch 6, wobei die Steuerschaltung (108) eine Phasensteuerung einer Leistungsabgabe an die Last bereitstellt.

8. Festkörper-Schaltkreisunterbrecher nach Anspruch 6, bei dem die Steuerschaltung (108) eine lineare Steuerung der an die Last abgegebenen Leistung ermöglicht.

## Revendications

1. Un interrupteur de circuit à l'état solide pour un circuit d'alimentation électrique CA (101) ayant une ligne (111) et un neutre (112) qui alimente un circuit de charge (106), ayant une tension appliquée et un courant appliqué, et qui contrôle l'alimentation lors de la détection de défauts à la terre et de défauts d'arc en parallèle et en série dans le circuit de charge, l'interrupteur de circuit comprenant :
a. un circuit convertisseur CA-CC (102) fournissant une alimentation CC basse tension à un circuit de traitement des défauts (104), et un circuit de détection à l'état solide (103),
b. le circuit de détection à l'état solide (103) comprenant des capteurs qui détectent les formes d'ondes de la tension appliquée et du courant appliqué au circuit de charge (106), et qui développent des formes d'ondes analogiques proportionnelles de la tension appliquée et du courant appliqué, et,
c. le circuit de traitement des défauts (104) comprenant
i. un processeur à l'état solide qui traite les formes d'ondes analogiques proportionnelles et, sur au moins l'un des points suivants 1) la détection de la présence d'un défaut à la terre dans le circuit de charge et 2) la détection de la présence d'un défaut d'arc dans le circuit de charge, génère un signal de sortie de défaut (107), et,
ii. un port de réinitialisation (109) qui arrête le signal de sortie de défaut sur réception d'un signal de réinitialisation, et
**caractérisé par** :
d. deux circuits de commutation bidirectionnels à l'état solide(400) dans chacune des lignes (111) et du neutre (112) entre le circuit d'alimentation électrique CA et le circuit de charge, les circuits de commutation bidirectionnels à l'état solide étant chacun isolés électriquement du circuit convertisseur CA-CC, des circuits de détection et du circuit de traitement, et, chaque circuit de commutation bidirectionnel à l'état solide contrôlé par un circuit de commande (108) qui fournit un signal de commande optique aux circuits de commutation bidirectionnels à l'état solide, et, sur détection du défaut à la terre ou du défaut d'arc par l'unité de traitement, déconnecte la charge de l'alimentation électrique en courant alternatif, et,
e. le circuit convertisseur CA-CC (102) comprend :
i. un circuit redresseur (202) piloté par ledit circuit d'alimentation électrique CA (101) et fournissant une forme d'onde redressée de courant continu variable dans le temps en tant que sortie du redresseur,
ii. un élément de stockage d'énergie (206) capable de fournir de l'énergie sous la forme d'un courant continu et connecté de manière opérationnelle au circuit de traitement des défauts et au circuit de détection à semi-conducteurs, et
iii. un premier MOSFET (301) entre ledit circuit redresseur (202) et ledit élément de stockage d'énergie (206), le premier MOSFET ayant une grille et une source et contrôlé par un circuit comparateur (204), et, le circuit comparateur (204) est réalisé comme un étage amplificateur à source commune unique comprenant un second MOSFET (302) ayant une tension grille-source seuil caractéristique, V_{T}, et connecté à la grille et à la source du premier MOSFET, et, une grille du second MOSFET connectée par l'intermédiaire d'un diviseur de tension (304, 305), à la sortie du redresseur, le diviseur de tension ayant une sortie, et, lorsque la sortie du réseau du diviseur de tension dépasse la V_{T} du second dispositif semi-conducteur MOSFET, la grille du premier MOSFET est tirée à la masse, ce qui ouvre le premier MOSFET, et, lorsque la sortie du réseau du diviseur de tension est inférieure à la V_{T}, la grille du premier MOSFET est connectée à son drain, ce qui ferme le premier MOSFET et charge l'élément de stockage de l'énergie (206),
iv. un circuit électronique (306, 307) entre le premier MOSFET (301) et l'élément de stockage d'énergie (206) pour limiter le courant circulant à travers le premier MOSFET (301), et,
v. un circuit de régulation de tension (308, 309, 310) entre ledit élément de stockage d'énergie (206) et ladite charge interne (311), la charge interne étant le circuit combiné de traitement des défauts (104) et le circuit de détection à l'état solide (103) .

2. L'interrupteur de circuit à l'état solide de la revendication 1 dans lequel le circuit de commande (108) réduit la tension de sortie appliquée au circuit de charge (106) à une valeur inférieure à un seuil d'arc mais supérieure à zéro lorsque le signal de sortie de défaut d'arc (107) est généré.

3. L'interrupteur de circuit à l'état solide de la revendication 1, dans lequel les circuits de détection à l'état solide qui détectent les formes d'onde de la tension appliquée et du courant appliqué au circuit de charge comprennent :
a. des capteurs de courant à effet Hall (601, 602) ayant des bornes de polarisation CC et des bornes de détection de courant, avec un capteur de courant à effet Hall monté sur chacune des lignes d'alimentation CA (111) et neutre (112), avec une polarisation CC fournie aux bornes de polarisation CC par le convertisseur CA-CC (102), et, avec les bornes de détection de courant attachées au circuit de traitement des défauts (104), et
b. le circuit redresseur (603, 202) piloté par ledit circuit d'alimentation en courant alternatif (101) et fournissant une forme d'onde de tension de courant continu variable dans le temps comme sortie, dans laquelle la forme d'onde de tension est atténuée à l'aide d'un diviseur résistif (604, 605), et la forme d'onde de tension atténuée résultante est appliquée au circuit de traitement des défauts (104) .

4. L'interrupteur de circuit à l'état solide de la revendication 1, dans lequel le circuit de traitement des défauts (104) comprend :
a. des amplificateurs différentiels (703, 705, 706) alimentés par le convertisseur CA-CC (102) connectés de manière opérationnelle (701, 702) aux circuits de détection à l'état solide (601, 602, 603) pour conditionner les formes d'ondes analogiques proportionnelles produisant des formes d'ondes analogiques proportionnelles conditionnées,
b. un microprocesseur (707) alimenté par le convertisseur CA-CC (102) et programmé pour numériser les formes d'ondes analogiques proportionnelles conditionnées, produisant des formes d'ondes de courant et de tension numérisées, et,
i. exécuter un sous-programme (711) pour effectuer le traitement des signaux sur les formes d'ondes de courant et de tension numérisées afin d'effectuer la détection des défauts à la terre, et
ii. d'exécuter un sous-programme (709, 710) pour effectuer le traitement des signaux sur les formes d'ondes de courant et de tension numérisées afin d'effectuer la détection des défauts d'arc, et
c. un circuit de verrouillage (714) ayant une condition de réglage et une condition de réinitialisation alimentées par le convertisseur CA-CC (102), et, placé dans la condition de réglage par la détection de défauts à la terre ou de défauts d'arc, et, restant dans la condition de réglage jusqu'à ce qu'il soit placé dans la condition de réinitialisation à l'aide d'un signal de réinitialisation externe (109).

5. L'interrupteur de circuit à l'état solide de la revendication 1 dans lequel le sous-programme (709, 710) pour effectuer le traitement du signal sur les formes d'ondes de tension et de courant numérisées afin d'effectuer la détection des défauts d'arc comprend en outre :
a. un sous-programme qui détecte la présence de sous-intervalles substantiels qui se produisent sur un intervalle de temps de mesure prédéfini dans lequel l'amplitude de la forme d'onde de courant numérisée est inférieure à une valeur prédéfinie, et,
b. un sous-programme qui calcule l'énergie totale du bruit contenue dans la forme d'onde de tension numérisée sur l'intervalle de temps de mesure prédéfini et qui calcule en outre une valeur d'énergie seuil à partir de l'énergie du bruit contenue dans la forme d'onde de tension numérisée pendant les sous-intervalles où l'amplitude de la forme d'onde de courant numérisée est inférieure à la valeur prédéfinie ; et,
c. un sous-programme qui signale la détection d'un défaut d'arc si la somme des sous-intervalles dans lesquels l'amplitude de la forme d'onde de courant numérisée est inférieure à la valeur prédéfinie obtenue pendant l'intervalle de temps de mesure prédéfini se situe dans une plage prédéfinie de valeurs d'intervalle de temps, et si l'énergie de bruit totale contenue dans la forme d'onde de tension numérisée dépasse la valeur d'énergie de seuil calculée.

6. L'interrupteur de circuit à l'état solide de la revendication 1, dans lequel chacun des circuits de commutation bidirectionnels à l'état solide (400) possède une borne d'entrée et une borne de sortie et comprend en outre :
a. un premier (407) et un second (408) MOSFET de puissance connectés en série, chaque MOSFET de puissance ayant une borne de drain, une borne de source et une borne de grille et ayant une tension de seuil spécifiée entre la borne de grille et la borne de source, dans lequel la borne de drain du premier MOSFET de puissance (407) comprend la borne d'entrée du circuit de commutation bidirectionnel à l'état solide (400) et la borne de drain du second MOSFET de puissance (408) comprend la borne de sortie du circuit de commutation bidirectionnel à l'état solide (400), les bornes de source des premier et second MOSFET de puissance sont interconnectées au niveau d'une première borne de commande et les bornes de grille des premier et second MOSFET de puissance (407, 408) sont interconnectées au niveau d'une seconde borne de commande, et ;
b. une source de tension comprenant un premier dispositif de redressement (404) connecté de la borne d'entrée du circuit de commutation bidirectionnel à l'état solide (400) à la deuxième borne de commande et un deuxième dispositif de redressement (406) connecté de la borne de sortie du circuit de commutation bidirectionnel à l'état solide (400) à la deuxième borne de commande et une diode Zener (402) connectée de la première borne de commande à la deuxième borne de commande, la diode Zener a une tension Zener qui dépasse la tension de seuil et qui est appliquée aux première et deuxième bornes de commande à travers une résistance de limitation de courant (403, 405) ; et
c. un phototransistor (401) ayant une conductance proportionnelle à l'intensité de l'éclairage incident sur le dispositif électronique photo-activé et connecté de la première borne de commande à la seconde borne de commande ; et
d. un dispositif émetteur de lumière (412) dans le circuit de commande (108), conçu pour éclairer le commutateur (401) et activé par le circuit de détection des défauts lorsqu'un défaut est signalé (109) .

7. L'interrupteur de circuit à l'état solide de la revendication 6, dans lequel le circuit de commande (108) assure la commande de phase d'une sortie de puissance vers la charge.

8. L'interrupteur de circuit à l'état solide de la revendication 6 dans lequel le circuit de commande (108) fournit un contrôle linéaire de la sortie de puissance vers la charge.
